# EUROPÄISCHE PATENTSCHRIFT

(11) **EP 2 136 148 B1**
(45) Veröffentlichungstag und Bekanntmachung des Hinweises auf die Patenterteilung: **11.08.2010**
(21) Anmeldenummer: 08158514.3
(22) Anmeldetag: 18.06.2008
(51) Int. Cl.: F24F 11/02

(54) **Vorrichtung und Verfahren zum Einstellen der Leckrate einer Undichtigkeit an einer spaltartigen Öffnung eines Rotationswärmetauschers**
Device and method for setting the leak rate through the sealing gaps of a rotary heat exchanger
Dispositif et method de réglage du taux de fuite d'une inétanchéité sur fente d'un echangeur de chaleur de rotation

(43) Veröffentlichungstag der Anmeldung: 23.12.2009
(73) Patentinhaber: Amrona AG, 6302 Zug (CH)
(72) Erfinder: Kind, Michael, 12347 Berlin (DE)
(74) Vertreter: Rupprecht, Kay

(56) Entgegenhaltungen:
- EP-A- 1 777 478
- DE-A1- 2 260 250
- US-A- 3 183 649
- US-A- 5 425 543
- US-A1- 2006 032 241

## Beschreibung

Die Erfindung betrifft eine Vorrichtung zum Einstellen einer Leckrate einer Undichtigkeit an einer spaltartigen Öffnung, insbesondere an einer spaltartigen Öffnung zwischen einem Rotor eines Rotationswärmetauschersystems und einer Abtrennung.

Die Luftdichtigkeit eines Gebäudes, und im Einzelnen die Luftdichtigkeit eines mit einer Hülle umschlossenen Raumes ist ein wichtiges Kriterium sowohl im Hinblick auf die Wärmedämmung als auch im Hinblick auf die Frage, wie Lüftungswärmeverluste gemindert werden können. Die Luftdichtigkeit eines umschlossenen Raumes wird mit einem Differenzdrucktest (Blower-Door-Test) bestimmt. Dabei wird durch einen in eine Raumhülle (meistens Tür oder Fenster) eingelassenen Ventilator innerhalb des umschlossenen Raumes ein konstanter Überdruck von z.B. 50 Pa erzeugt und gehalten. Die durch Undichtigkeiten der Raumhülle ausströmende Luftmenge muss durch den Ventilator in den umschlossenen Raum hineingedrückt werden und wird gemessen. Der sogenannten n50-Wert gibt an, wie viel mal das Innenraumvolumen des umschlossenen Raumes pro Stunde umgesetzt wird.

Undichtigkeiten in der Raumhülle führen zu einem ungewollten und unkontrollierten Austausch zwischen der Raumatmosphäre und der Außenatmosphäre. Der dabei auftretende Luftaustausch führt dazu, dass kontinuierlich der Raumluftatmosphäre Außenluft zugeführt und von dort Innenluft als Abluft abgeführt wird. Der auf Undichtigkeiten der Raumhülle zurückzuführende (ungewollte) Luftaustausch tritt umso stärker in Erscheinung, je größer die Differenz zwischen dem in Inneren des umschlossenen Raumes herrschenden Druck und dem außerhalb des Raumes herrschenden Druck ist. Dies trifft beispielsweise für einen Reinraum zu, bei welchem das Eindringen von Staub und Schmutz dadurch verhindert wird, dass im Raum permanent ein Überdruck gegenüber der Außenatmosphäre herrscht. Auf diese Art und Weise soll die Partikelkontamination unter bestimmten Werten liegen. Rein- und Reinsträume werden für spezielle Fertigungsverfahren, vor allem in der Halbleiterfertigung benötigt, um die Strukturen integrierter Schaltkreise im Bereich von Bruchteilen eines Mikrometers nicht zu stören.

Die aufgrund von Undichtigkeiten in der Raumhülle auftretenden Leckagen führen bei einem Raum, in welchem gegenüber der Außenatmosphäre ein Überdruck eingestellt wurde, letztendlich dazu, dass das Medium der Raumatmosphäre durch Undichtigkeiten der Raumhülle austritt und somit der Überdruck abgebaut wird.

Der aufgrund von Undichtigkeiten in der Raumhülle auftretende Fluidübertritt von der Raumatmosphäre zu der Außenatmosphäre spielt insbesondere auch bei Räumen eine Rolle, deren Raumatmosphäre beispielsweise durch Zugabe eines sauerstoffverdrängenden Gases (nachfolgend auch einfach "Inertgas" genannt) einen im Vergleich zur "normalen" Luft reduzierten Sauerstoffanteil aufweist. Ein derartiges Inertisierungsniveau, bei welchem die Raumatmosphäre einen im Vergleich zur "normalen" Luft reduzierten Sauerstoffanteil aufweist, wird oftmals als präventive Brandschutzmaßnahme eingestellt. Aufgrund der Reduktion des Sauerstoffanteils in dem umschlossenen Raum kann das Risiko der Entstehung eines Brandes minimiert werden.

Da über Undichtigkeiten in der Raumhülle ein ungewollter Fluidübertritt von der inertisierten Raumatmosphäre zu der Außenatmosphäre auftreten kann, ist im präventiven Brandschutz die Dichtigkeit der Raumhülle ein wichtiges Kriterium im Hinblick auf die Frage, wie viel Inertgas pro Zeiteinheit dem umschlossenen Raum nachgeführt werden muss, damit die gewünschte und für einen wirksamen Brandschutz erforderliche Inertisierung permanent gehalten werden kann. Das Problem dabei ist, dass bei einem inertisierten Raum aufgrund der auf Undichtigkeiten der Raumhülle zurückzuführenden Leckageströme eine permanente (ungewollte) Zufuhr von Frischluft und somit Sauerstoff in den inertisierten Raum stattfindet, so dass - sofern Inertgas nicht nachgeführt wird - der Sauerstoffgehalt in der Raumatmosphäre kontinuierlich ansteigt und der gewünschte Brandschutz nicht mehr gegeben ist.

Dieser Effekt ist besonders ausgeprägt, wenn in dem umschlossenen Raum ein im Vergleich zur Außenatmosphäre höherer Druck herrscht.

Andererseits ist bei umschlossenen Räumen oftmals auch ein gewisser Luftwechsel erwünscht, um Raumluft mit Außenluft oder Frischluft auszutauschen. Beispielsweise in Aufenthaltsräumen ist ein Luftwechsel für die Versorgung mit Sauerstoff, für das Abführen von Kohlendioxid und für den Abtransport von Kondenswasser notwendig. Aber auch in Lagerräumen, die nicht oder nur kurzzeitig von Personen betreten werden, ist ein Luftwechsel oftmals unumgänglich, um schädliche Bestandteile, die beispielsweise von den im Lagerraum untergebrachten Waren ausdünsten, abzuführen.

Ist die Gebäude- oder Raumhülle nahezu luftdicht ausgeführt, wie es die moderne Bauweise vorsieht, kann ein ungeregelter Luftwechsel, bei welchem es zu einem ungewollten und unkontrollierten Austausch zwischen der Raumatmosphäre und der Außenatmosphäre kommt, nicht mehr stattfinden. Indem in der Raumhülle absichtlich Undichtigkeiten eingebracht werden, kann der erforderliche Luftwechsel wiederhergestellt werden. Geeignete Undichtigkeit in der Raumhülle sind beispielsweise Fugen von Fenster und Türen. In dieser Form ist die Luftwechselrate jedoch nicht konstant, sondern stark vom Wetter, und insbesondere vom Wind abhängig. Ferner ändert sich die für einen umschlossenen Raum bereitzustellende Luftwechselrate in Abhängigkeit von beispielsweise der Begehung des Raumes durch Personen oder (allgemeiner ausgedrückt) von der Nutzung des Raumes. Die über eine in der Raumhülle absichtlich eingebrachte Undichtigkeit erzielbare Luftwechselrate kann diese von der Nutzung des Raumes abhängigen Schwankungen der bereitzustellenden Luftwechselrate nicht berücksichtigen.

Weiterhin offenbart die DE 22 60 250 einen umlaufenden Regenerativ-Wärmeaustauscher mit einem Wärmespeicherkörper, ferner mit die Strömungswege für die Wärmetauschmittel durch den Speicherkörper begrenzenden Dichtungen und mit Mitteln zur Beaufschlagung mindestens einer Dichtung mit einem Druckmittel zur Erzeugung eines gewünschten Berührungsdruckes dieser Dichtung, wobei der Wärmeaustauscher ein Messorgan zur Messung der Größe des Wärmetauschmittelleckstromes zwischen der druckbeaufschlagten Dichtung und der zugehörigen Speicherköperdichtfläche sowie ein Steuerorgan zur leckstromabhängigen Steuerung der Druckmittelzufuhr zu der druckbeaufschlagten Dichtung aufweist, so dass der Wärmetauschmittelleckstrom auf einem gewünschten Wert gehalten wird.

Die US 2006/0032241 A1 schlägt ein Verfahren und eine Vorrichtung für die Klimatisierung vor und kann für Gebäude, Büros und Werkshallen verwendet werden, wobei gereinigter Sauerstoff und Stickstoff oder eine Mischung dieser Gase aus Speichereinheiten, die über regulierende Ventile mit der Luftpassage verbunden sind, in den Luftstrom der Klimaanlage eingespritzt werden, wobei diese elektronisch mit dem Steuerbord und dem Sauerstoffanalysierer verbunden ist, um den Sauerstoffgehalt während des Tages zwischen 20-21 % bis zu 100 % zu regeln.

Demnach liegt der vorliegenden Erfindung die Problemstellung zugrunde, eine Lösung anzugeben, mit welcher in einer einfach zu realisierenden Weise die über eine in einer Raumhülle absichtlich eingebrachte Undichtigkeit erzielbare Luftwechselrate an eine für den Raum bereitzustellenden minimal-erforderliche Soll-Luftwechselrate angepasst werden kann. Insbesondere soll es auch möglich sein, dass die aufgrund des Wetters auftretenden Schwankungen der über die Undichtigkeit erzielbaren Luftwechselrate bei Bedarf ausgeglichen werden können.

Diese Aufgabe wird gelöst durch ein Verfahren nach Anspruch 1 und eine Anlage nach Anspruch 7.

Weiterhin wird eine Vorrichtung vorgeschlagen, welche ausgelegt ist, eine Leckrate einer Undichtigkeit an einer spaltartigen Öffnung einzustellen. Hierzu weist die Vorrichtung einen Abdichtkörper mit mindestens einer Kammer auf, wobei der Abdichtkörper zumindest teilweise aus einem flexiblen Material gebildet ist. Ferner weist die Vorrichtung ein mit der mindestens einen Kammer verbundenes Leitungssystem auf, über welches der Kammer ein Fluid zuführbar ist. Da der

Abdichtkörper zumindest teilweise aus einem flexiblen Material gebildet ist, bewirkt eine geregelte Zufuhr des Fluid zu der mindestens einen Kammer eine definierte Querschnittserweiterung des Abdichtkörpers. Diese durch die Fluidzufuhr bewirkte Querschnittserweiterung wird dazu verwendet, die Undichtigkeit zumindest teilweise abzudichten und somit die Leckrate der Undichtigkeit zu variieren.

Dadurch, dass die Fluidzufuhr zu der mindestens einen Kammer in geregelter Weise erfolgt, ist die durch die Fluidzufuhr bewirkte Querschnittserweiterung bzw. Querschnittsänderung des Abdichtkörpers einstellbar. Die Leckrate der beispielsweise absichtlich in der Raumhülle vorgesehenen Undichtigkeit kann dadurch auf einen bestimmten und an die jeweilige Anwendung angepassten Wert eingestellt werden. Hierzu ist der Abdichtkörper in Bezug auf die Undichtigkeit derart anzuordnen, dass bei der Fluidzufuhr zu der mindestens einen Kammer die Querschnittserweiterung des Abdichtkörpers in Richtung der Undichtigkeit erfolgt.

In einer bevorzugten Realisierung ist eine Halterung vorgesehen, über welche der Abdichtkörper vorzugsweise in unmittelbarer Nähe der Undichtigkeit gehalten werden kann, so dass die bei einer Fluidzufuhr bewirkte Querschnittserweiterung des Abdichtkörpers die Undichtigkeit zumindest teilweise überdeckt und somit die Leckrate der Undichtigkeit reduziert. Hierbei ist es denkbar, dass die Halterung in Gestalt eines Profils ausgebildet ist, so dass der Halterung nicht nur eine Haltefunktion, sondern auch eine Führungsfunktion zukommt. Mit der Führungsfunktion wird bewirkt, dass sich der Abdichtkörper bei einer Querschnittserweiterung gezielt in Richtung der Undichtigkeit ausdehnt.

So kann die Leckrate einer Undichtigkeit, insbesondere an einer spaltartigen Öffnung, auf einen festlegbaren Wert eingestellt werden, indem durch eine Querschnittserweiterung des Abdichtkörpers dieser vorzugsweise gezielt in Richtung der Undichtigkeit expandiert und somit die Undichtigkeit zumindest teilweise abdichtet. Der Grad der Abdichtung der Undichtigkeit hängt dabei von dem Ausmaß der Expansion des Abdichtkörpers ab.

Um die Querschnittserweiterung des Abdichtkörpers in einer besonders einfach zu realisierenden, aber dennoch effektiven Weise steuern zu können, ist in einer bevorzugten Realisierung eine Steuerung vorgesehen, welche ausgelegt ist, die durch Fluidzufuhr bewirkbare Querschnittserweiterung des Abdichtkörpers in Abhängigkeit von einer vorgegebenen, maximal zulässigen Leckrate der Undichtigkeit einzustellen. Die Querschnittserweiterung des Abdichtkörpers wird vorzugsweise eingestellt, indem der mindestens einen Kammer des Abdichtkörpers eine vorab festgelegte Fluidmenge zugeführt wird.

In einer besonders bevorzugten Realisierung ist vorgesehen, dass die mindestens eine Kammer des Abdichtkörpers mit einem unter Druck stehenden Fluid, wie beispielsweise Druckluft oder Stickstoff aus einer Gasflasche, beaufschlagt wird, um ein Aufblasen dieser und somit eine Querschnittserweiterung des Abdichtkörpers zu bewirken. Zu diesem Zweck weist die erfindungsgemäße Vorrichtung vorzugsweise eine Fluidquelle (Generator, Druckflasche etc.) auf. Die Fluidquelle ist über das Leitungssystem mit der mindestens einen Kammer des Abdichtkörpers verbunden oder über eine geeignete Ventilanordnung verbindbar. Bevorzugt dabei ist, wenn das Fluid in geregelter Weise von der Fluidquelle zu der mindestens einen Kammer zugeführt wird.

Zusammenfassend bleibt festzuhalten, dass mit der dargestellten Lösung in einer leicht zu realisierenden Weise die Leckrate einer beispielsweise absichtlich in der Raumhülle eingebrachten und vorzugsweise spaltförmigen Undichtigkeit auf einen frei wählbaren Wert eingestellt werden kann, indem in geregelter Weise die mindestens eine Kammer des Abdichtkörpers mit einem Fluid, wie beispielsweise Druckluft, beaufschlagt wird. Dies hat eine Querschnittserweiterung des Abdichtkörpers zur Folge, infolgedessen sich der Abdichtkörper in Richtung der Undichtigkeit ausdehnt und diese zumindest teilweise abdichtet. Die erfindungsgemäße Lösung eignet sich insbesondere zum Einstellen einer Leckrate einer spaltförmigen Undichtigkeit (Spaltöffnung) in der Raumhülle eines umschlossenen Raumes.

Die Erfindung ist allerdings keinesfalls nur hierauf beschränkt. In überraschender Weise hat sich gezeigt, dass sich die dargestellte Lösung auch zum Einstellen einer festlegbaren Leckrate eines Spaltes zwischen einem Rotor eines Rotationswärmetauschers und einer Abtrennung eignet. Ein Rotationswärmetauscher ist ein Wärmeüberträger, welcher in zwei Luftströmen eine Wärmerückgewinnung ermöglicht. Thermische Energie wird dabei von einem warmen Fluidstrom auf einen kalten Fluidstrom übertragen, indem eine rotierende Speichermasse in Gestalt eines Rotors (bzw. Wärmerades) abwechselnd durch den warmen Fluidstrom aufgewärmt und durch den kalten Fluidstrom abgekühlt wird.

Der Rotor des Rotationswärmetauschers besteht in der Regel aus zahlreichen zur Drehachse des Rotors parallelen Kanälen, wobei ein Teil der Kanäle von dem warmen Fluid und der andere Teil der Kanäle von dem kalten Fluid durchströmt werden. Dabei wird die Fähigkeit der Kanalwände, thermische Energie zu speichern, ausgenutzt. Im Einzelnen wird durch eine erste Hälfte des Rotors der warme Fluidstrom geleitet, wodurch die Wände der in dieser einen Hälfte des Rotors vorgesehenen Kanäle aufgewärmt werden. Dreht sich der Rotor weiter, erreichen die aufgewärmte Kanäle den Bereich, wo diese von dem kalten Fluid durchströmt werden. An den warmen Wänden der Kanäle wird das kalte Fluid erwärmt, was in gleicher Weise zu einer Abkühlung der Kanalwände führt.

Rotationswärmeüberträger werden derzeit häufig in der Lüftungs- und Klimatechnik in ventilierten Gebäuden sowie im Offshore-Bereich (z.B. bei Kreuzfahrtschiffen) eingesetzt.

Allerdings sind Rotationswärmetauscher nur bei bestimmten Anwendungen einsetzbar, da bei der mit dem Rotationswärmetauscher bewirkbaren Wärmeübertragung konstruktionsbedingt eine Stoffübertragung zwischen dem warmen und dem kalten Fluidstrom nicht vollständig verhindert werden kann. Insbesondere ist bei herkömmlichen Rotationswärmetauschern nicht zu vermeiden, dass zwischen dem Rotor und der Dichtung an der Trennwand bzw. an dem Gehäuse des Rotors immer ein Spaltraum vorhanden ist, wo eine Luftundichtigkeit auftritt. Der Umfang dieser sogenannten Leck- oder Leckageverluste wird durch den Druckunterschied zwischen dem Sektor, der von dem warmen Fluid durchströmt wird, und dem Sektor, der von dem kalten Fluid durchströmt wird, und der Größe der Spaltöffnung bestimmt. Diese Leckverluste beeinflussen außer der Qualität auch die Quantität der Raumatmosphäre.

Aus dem Stand der Technik sind verschiedene Ansätze bekannt, um die bei einem Rotationswärmetauscher auftretenden Leckverluste zu minimieren. Ein Ansatz sieht dabei vor, in dem Spaltraum zwischen dem Rotor und der Trennwand bzw. dem Rotorgehäuse Schleifdichtungen vorzusehen (vgl. hierzu beispielsweise die Ausführungen in US 4,056,141 B).

Ein wesentlicher Nachteil derartiger zum Abdichten des Spaltraumes verwendeten Schleifdichtungen ist insbesondere darin zu sehen, dass mit diesen Schleifdichtungen insbesondere nicht die Leckrate des Spaltraumes, d.h. der durch den Spaltraum auftretende Leckverlust, einstellbar ist.

Bei manchen Anwendungen ist es jedoch erwünscht, dass der für einen umschlossenen Raum bereitzustellende, minimal-erforderliche (Soll-)Luftwechsel durch den Spaltraum eines Rotationswärmetauschers erfolgt, um auf eine weitere (absichtlich eingebrachte) Undichtigkeit in der Raumhülle des umschlossenen Raumes verzichten zu können. Da allerdings - wie bereits zuvor angedeutet - der Wert der bereitzustellenden Mindestluftwechselrate von unterschiedlichen Parametern abhängt und insbesondere nicht zeitlich konstant ist, ist es erstrebenswert, dass der bei einem Rotationswärmetauscher durch den Spaltraum auftretende Leckverlust, d.h. die Leckrate der Spaltöffnungen des Rotationswärmetauschers, auf einen frei wählbaren Wert einstellbar ist.

Dies kann mit der dargestellten Lösung realisiert werden, wenn diese zusammen mit einem Rotationswärmetauschersystem der zuvor beschriebenen Art verwendet wird. Demnach eignet sich die beschriebene Lösung insbesondere zum Einstellen einer festlegbaren Leckrate durch den Spalt zwischen einem Rotor eines Rotationswärmetauschers und einer Abtrennung bzw. einem Rotationswärmetauschergehäuse. Dabei ist der bei Bedarf in geregelter Weise expandierbare Abdichtkörper in der Nähe des Spaltraumes anzuordnen, welcher für die Leckverluste verantwortlich ist.

Insbesondere ist es dabei denkbar, dass der Abdichtkörper eine schlauchförmige Kammer aufweist, welche an einer Seite der Abtrennung vorzugsweise in unmittelbarer Nähe des Spaltraumes angeordnet ist.

In einer bevorzugten Realisierung des Wärmetauschersystems, bei welchem die dargestellte Lösung zum Einstellen der Leckverluste verwendet wird, ist vorzugsweise eine Steuerung vorgesehen, welche ausgelegt ist, die durch Fluidzufuhr bewirkbare Querschnittserweiterung des Abdichtkörpers in Abhängigkeit von einer Drehzahl des Rotors einzustellen. Denkbar hierbei wäre es beispielsweise, dass in einem Fall, wenn der Rotor steht, die mindestens eine Kammer des Abdichtkörpers vollständig mit einem unter Druck stehenden Fluid, wie beispielsweise Druckluft oder Stickstoff aus einer Druckgasflasche oder einem Stickstoffgenerator, beaufschlagt wird, um somit eine maximale Querschnittserweiterung des Abdichtkörpers und somit eine vollständige Abdichtung des Spaltraumes zu bewirken. Demnach ist es möglich, Spaltverluste vollständig zu unterbinden, wenn der Rotor des Wärmetauschers steht, d.h. wenn eine Wärmeübertragung entweder nicht erforderlich oder nicht gewünscht ist.

Nach alledem ist ersichtlich, dass mit der dargestellten Lösung bei einem Rotationswärmetauschersystem ein Stoffaustausch durch Leckverluste - falls dies gewünscht ist - auch vollständig unterbunden werden kann.

Dies ermöglicht es, das Rotationswärmetauschersystem zum Übertragen von thermischer Energie zwischen einem warmen Fluidstrom und einem kalten Fluidstrom einzusetzen, wobei das einen ersten Sektor des Wärmetauschersystems durchströmende warme Fluid aus einem umschlossenen Raum angesaugt und nach dem Durchströmen des Rotationswärmetauschers wieder dem umschlossenen Raum zugeführt wird, und wobei zur Minderung des Risikos und zum Löschen von Bränden in dem umschlossenen Raum eine Inertisierungsanlage zum Einsatz kommt. Eine derartige Inertisierungsanlage dient dazu, im Falle eines Brandes oder zur Minderung des Risikos eines Brandes in dem umschlossenen Raum ein sauerstoffverdrängendes Gas der Raumatmosphäre zuzuführen, um den Sauerstoffgehalt in dem umschlossenen Raum auf ein vorab festgelegtes oder festlegbares Inertisierungsniveau abzusenken, bei welchem die Entflammbarkeit der meisten brennbaren Materialien bereits deutlich herabgesetzt ist.

Üblicherweise wurde ein mit einer derartigen Inertisierungsanlage ausgerüsteter umschlossener Raum nicht mit Hilfe eines Rotationswärmetauschersystems temperiert, da eine geeignete Inertisierung des umschlossenen Raumes aufgrund der nicht vermeidbaren Leckverluste nur durch permanentes Nachführen von sauerstoffverdrängendem Gas (Inertgas) möglich war, was sich im Hinblick auf die laufenden Betriebskosten nicht gelohnt hat.

Indem die dargestellte Lösung verwendet wird, um bei einem Rotationswärmetauschersystem den Spaltraum in geregelter Weise zumindest teilweise abzudichten, kann die durch den Spaltraum begründete Undichtigkeit einerseits als Druckentlastung verwendet werden, wenn beispielsweise im Falle eines Brandes der umschlossene Raum innerhalb kürzester Zeit mit Inertgas zu fluten ist. Andererseits ist es ferner denkbar, zum Aufrechterhalten einer Inertisierung in dem umschlossenen Raum die Spaltöffnung zwischen dem Rotationswärmeüberträger und der Abtrennung vollständig abzudichten, so dass ein vorab in der Raumatmosphäre eingestelltes Inertisierungsniveau aufrechterhalten werden kann, ohne dass hierzu in großen Mengen Inertgas nachzuführen ist.

Der Sauerstoffgehalt in dem umschlossenen Raum kann im Falle eines Brandes oder zur Minderung des Risikos eines Brandes durch Einleiten eines sauerstoffverdrängenden Gases auf ein vorab festgelegtes oder festlegbares Inertisierungsniveau abgesenkt werden.
Ferner sollte durch Zufuhr von Fluid zu der mindestens einen Kammer des Abdichtkörpers der Querschnitt des Abdichtkörpers derart expandiert werden, dass der Spaltraum des Rotationswärmetauschersystems zumindest teilweise abgedichtet wird.

Im Folgenden wird die Erfindung anhand von Ausführungsformen unter Bezugnahme auf die beigefügten Zeichnungen näher beschrieben.

Es zeigen:
- Fig. 1: eine schematische Ansicht einer Ausführungsform der erfindungsgemä- ßen Vorrichtung zum Einstellen einer Leckrate einer Undichtigkeit an ei- ner spaltförmigen Öffnung;
- Fig. 2: eine schematische Ansicht eines Wärmetauschsystems zum Übertragen von Wärmeenergie zwischen einem warmen Fluid und einem kalten Flü- id, wobei das Rotationswärmetauschersystem zum Minimieren eines un- gewollten Fluidübertrittes von einem ersten Sektor, der von dem warmen Fluid durchströmt wird, zu einem zweiten Sektor, der von dem kalten Fluid durchströmt wird, eine Ausführungsform der erfindungsgemäßen Vorrichtung aufweist; und
- Fig. 3: das in Fig. 2 dargestellte Rotationswärmetauschersystem ohne die erfin- dungsgemäße Vorrichtung zum Einstellen der Leckrate der Spaltöffnun- gen des Rotationswärmetauschersystems.

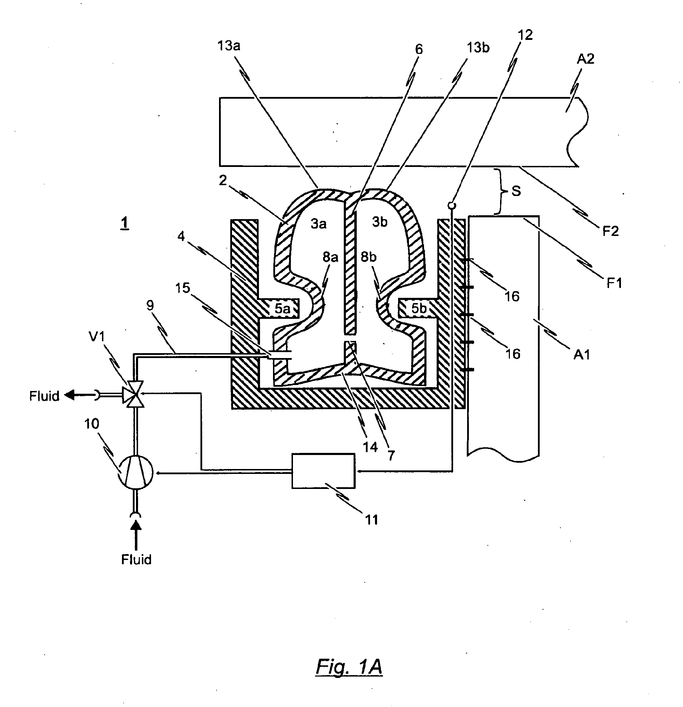

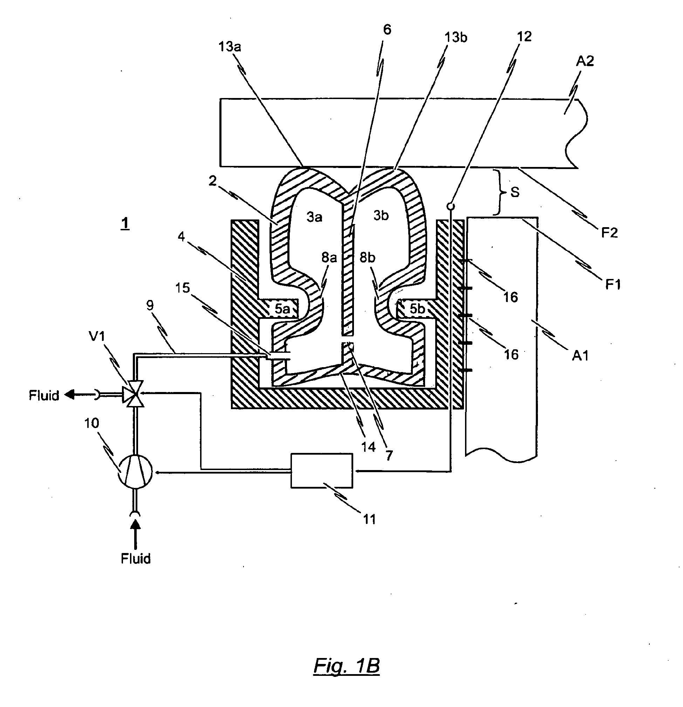

Fig. 1 zeigt in einer schematischen Ansicht eine bevorzugte Ausführungsform der erfindungsgemäßen Vorrichtung 1 zum Einstellen einer Leckrate einer Undichtigkeit S zwischen zwei Flächen F1, F2. Im Einzelnen zeigt Fig. 1A die Vorrichtung 1, bei welcher der Abdichtkörper 2 in einem unexpandierten Zustand vorliegt, während in Fig. 1B ein Zustand der Vorrichtung 1 dargestellt ist, bei welchem der Abdichtkörper 2 mit einem Fluid, insbesondere mit Druckluft, beaufschlagt ist und somit der Abdichtkörper 2 in einem expandierten Zustand vorliegt.

Die Vorrichtung 1 dient bei der in Fig. 1 gezeigten Ausführungsform zum Abdichten einer zwischen einem ersten Bauteil A1 und einem zweiten Bauteil A2 ausgebildeten Undichtigkeit S, die - wie dargestellt - in Gestalt eines Spaltraumes zwischen einer Stirnseite S1 des ersten Bauteils A1 und einer Seitenfläche S2 des zweiten Bauteils A2 gebildet wird. Die erfindungsgemäße Vorrichtung 1 eignet sich insbesondere zum Einstellen einer Leckrate der Undichtigkeit S, welche nachfolgend auch als "Spalt" oder "Spaltraum" bezeichnet wird. Hierzu ist die Vorrichtung 1 an einer Seitenfläche F1 des ersten Bauteils A1 befestigt und wirkt in Richtung der Seitenfläche F2 des zweiten Bauteils A2.

Die in Fig. 1 dargestellte Ausführungsform der erfindungsgemäßen Vorrichtung 1 weist einen Abdichtkörper 2 auf, welcher aus einem flexiblen Material, insbesondere einem Gummimaterial gebildet ist. Der Innenraum des Abdichtkörpers 2 ist mit Hilfe einer Mittelwand 6 in eine erste Kammer 3a und eine zweite Kammer 3b eingeteilt. Diese beiden Kammern 3a, 3b stehen über eine in der Mittelwand 6 ausgebildete Öffnung 7 in Fluidverbindung. Des Weiteren ist ein Leitungssystem 9 vorgesehen, welches bei der dargestellten Ausführungsform einerseits über ein Mundstück 15 mit der ersten Kammer 3a und andererseits mit einer Fluidquelle 10 verbunden ist. Als Fluidquelle 10 kommt bei der dargestellten Ausführungsform eine Druckluftquelle in Gestalt eines über eine Steuerung 11 ansteuerbaren Kompressors zum Einsatz. Denkbar ist es allerdings auch, als Fluidquelle 10 eine Gasflasche oder eine Gasflaschenbatterie vorzusehen, um bei Bedarf dem Leitungssystem 9, und insbesondere den beiden Kammern 3a, 3b ein unter Druck stehendes Fluid zuzuführen.

In dem Leitungssystem 9 ist ein ebenfalls über die Steuerung 11 ansteuerbares Ventil V1 angeordnet, über welches die Fluidquelle 10 mit der ersten Kammer 3a in Fluidverbindung gebracht werden kann. Vorzugsweise ist das Ventil V1 als Dreiwegeventil ausgeführt, welches einerseits eine geregelte Zufuhr des unter Druck stehenden Fluids aus der Fluidquelle 10 zu den beiden Kammern 3a, 3b des Abdichtkörpers 2 und andererseits ein geregeltes Abführen von Fluid aus den zuvor beaufschlagten Kammern 3a, 3b erlaubt. Auf diese Weise kann die nachfolgend unter Bezugnahme auf Fig. 1B beschriebene Verformung des Abdichtkörpers 2 eingestellt werden kann.

Der Abdichtkörper 2 weist an seiner oberen Dichtfläche zwei Dichtungslippen 13a, 13b auf, die den jeweiligen Kammern 3a, 3b zugeordnet sind. Wie dargestellt, dient die Mittelwand 6 zum Verbinden der beiden Dichtungslippen 13a, 13b mit dem Boden 14 des Abdichtkörpers 2. Selbstverständlich ist die Erfindung nicht auf eine Vorrichtung 1 beschränkt, welche - wie in Fig. 1 dargestellt - einen Abdichtkörper 2 mit zwei Kammern 3a, 3b aufweist, wobei diese beiden Kammern 3a, 3b über eine Mittelwand 6 voneinander räumlich getrennt sind. Vielmehr ist es auch denkbar, dass der Abdichtkörper 2 lediglich eine Kammer aufweist, die über ein Leitungssystem 9 geeignet mit einer Fluidquelle 10 verbunden ist.

Auch ist die Erfindung nicht darauf beschränkt, dass die Kammer(n) 3a, 3b des Abdichtkörpers 2 mit Druckluft beaufschlagt werden. Grundsätzlich ist jedwedes Fluid denkbar, welches über ein Leitungssystem 9 den Kammer(n) 3a, 3b des Abdichtkörper 2 zuführbar ist, um eine Expansion des Abdichtkörpers 2 zu bewirken.

Bei der in Fig. 1 dargestellten Ausführungsform wird der Abdichtkörper 2 mit Hilfe einer Halterung 4 in unmittelbarer Nähe der Undichtigkeit S gehalten. Hierzu ist die Halterung 4 über Schraubverbindungen 16 mit der Seitenfläche F1 des ersten Bauteils A1 verbunden. Wie dargestellt, ist die Halterung 4 als Profil ausgebildet, welches in Richtung der Seitenfläche F2 des zweiten Bauteils A2 geöffnet ist. Auf diese Weise wird sichergestellt, dass bei einer Beaufschlagung der Kammern 3a, 3b beispielsweise mit Druckluft die Expansion des Abdichtkörpers 2 in Richtung der zweiten Seitenfläche F2 erfolgt.

Die Richtung der erzielbaren Expansion des Abdichtkörpers 2 wird bei der dargestellten Ausführungsform jedoch nicht nur über die Profilform der Halterung 4, sondern auch über die Mittelwand 6 bestimmt. Die Mittelwand 6 gibt dem Abdichtkörper 2 bei seiner Expansion eine Vorzugsrichtung vor.

Bei der in Fig. 1 dargestellten Ausführungsform der erfindungsgemäßen Vorrichtung 1 weist jede Kammer 3a, 3b des Abdichtkörpers 2 jeweils eine Nut 8a, 8b auf, in die eine zugeordnete Nase 5a, 5b der Halterung 4 eingreift, um den Abdichtkörper 2 relativ zu der Halterung 4 in Position zu halten. Anstelle solcher in Nuten 8a, 8b eingreifenden Nasen 5a, 5b ist es selbstverständlich auch denkbar, beispielsweise den Boden 14 des Abdichtkörpers 2 mit der Grundfläche der als Profil ausgebildeten Halterung 14 zu verbinden.

Nachfolgend wird unter Bezugnahme auf Fig. 1B die Funktionsweise der der erfindungsgemäßen Vorrichtung 1 näher beschrieben.

Wie bereits angedeutet, erlaubt das Leitungssystem 9, welches über das Ventil V1 mit den beiden Kammern 3a, 3b verbindbar ist, die Zufuhr von Druckluft bzw. eines unter Druck stehenden Fluids. Die Fluidzufuhr zu den Kammern 3a, 3b des Abdichtkörpers 2 wird von der Steuerung 11 in Abhängigkeit von der gewünschten Leckrate der Undichtigkeit S geregelt. Für den Fall, wenn die Undichtigkeit S mit dem Abdichtkörper 2 vollständig abgedichtet werden soll, bewirkt die Steuerung 11, dass die beiden Kammern 3a, 3b des Abdichtkörpers 2 derart mit dem unter Druck stehenden Fluid beaufschlagt werden, dass sich eine maximal bewirkbare Querschnittserweiterung des Abdichtkörpers 2 und somit eine maximal bewirkbare Expansion des Abdichtkörpers 2 in Richtung der zweiten Seitenfläche F2 einstellt. Ein solcher Zustand ist in Fig. 1B dargestellt.

Der Darstellung gemäß Fig. 1B ist insbesondere entnehmbar, dass zum vollständigen Abdichten der Undichtigkeit S der Abdichtkörper 2 derart in Richtung der zweiten Seitenfläche F2 ausgedehnt ist, dass die beiden Dichtungslippen 13a, 13b an der zweiten Seitenfläche F2 anliegen und somit die Undichtigkeit S vollständig abdichten.

Es ist zu berücksichtigen, dass in den Figuren 1A und 1B die Ausführungsform der erfindungsgemäßen Vorrichtung 1 jeweils in einer Seitenschnittansicht gezeigt ist. Wenn mit Hilfe der erfindungsgemäßen Vorrichtung 1 die Leckrate einer Undichtigkeit eingestellt werden soll, welche durch einen ringförmigen Spalt begründet wird, ist die erfindungsgemäße Vorrichtung 1 entsprechend ringförmig auszubilden und an dem ringförmigen Spalt anzuordnen.

Die erfindungsgemäße Vorrichtung 1 zeichnet sich insbesondere dadurch aus, dass die Leckrate einer Undichtigkeit S auf einen vorab festgelegten Wert eingestellt werden kann. Die Leckrate ist der Quotient aus dem pV-Wert eines Gases, das während einer Zeitspanne durch einen Leitungsquerschnitt strömt, und der Zeitspanne. Dabei ist der pV-Wert das Produkt aus Druck und Volumen einer bestimmten Menge eines Gases bei der jeweils herrschenden Temperatur. Die Leckrate ist abhängig von der Gasart, einer Druckdifferenz zwischen dem Anfang und dem Ende des Leitungsquerschnittes bzw. der Undichtigkeit und der Temperatur.

Der vorliegenden Erfindung liegt dabei die Erkenntnis zugrunde, dass die Leckrate einer Undichtigkeit variiert werden kann, indem der Querschnitt der Undichtigkeit, durch welchen das Gas strömen kann, entsprechend vergrößert oder verkleinert wird. Diese Veränderung des Strömungsquerschnittes erfolgt bei der vorliegenden Erfindung, indem in geregelter Weise die Kammern 3a, 3b mit einem Fluid, beispielsweise mit Druckluft, beaufschlagt werden, um somit eine gezielte Expansion des Abdichtkörpers 2 in den Leitungsquerschnitt der Undichtigkeit S zu bewirken. Wie bereits dargelegt, erfolgt diese gezielte Expansion des Abdichtkörpers 2 in den Strömungsquerschnitt der Undichtigkeit S, indem - abhängig von der einzustellenden Leckrate - die Kammern 3a, 3b unterschiedlich stark mit dem Fluid beaufschlagt werden.

Grundsätzlich ist es denkbar, dass die erfindungsgemäße Vorrichtung 1 Mittel umfasst, mit denen die Leckrate durch die Undichtigkeit S erfasst werden kann, um der Steuerung 11 kontinuierlich oder zu vorgegebenen Zeiten bzw. Ereignissen die tatsächlich eingestellte Leckrate zu übermitteln und somit einen Regelkreis auszubilden. Bei der in Fig. 1 dargestellten Ausführungsform der erfindungsgemäßen Vorrichtung 1 ist hierzu ein Durchflusssensor 12 in dem Leitungsquerschnitt der Undichtigkeit S angeordnet. Dieser Durchflusssensor 12, welcher beispielsweise als berührungsfreier Ultraschallströmungsmesser ausgebildet sein kann, ist entsprechend mit der Steuerung 11 verbunden, so dass die Steuerung 11, der Durchflusssensor 12 und das über die Steuerung 11 ansteuerbare Ventil V1 einen Regelkreis begründen, mit dem sehr genau eine gewünschte Leckrate der Undichtigkeit S eingestellt werden kann.

Die erfindungsgemäße Vorrichtung 1 wurde insbesondere im Hinblick auf die Problemstellung entwickelt, dass die bei einem Rotationswärmetauschersystem konstruktionsbedingt auftretenden Leckverluste zwischen dem Rotor und dem Rotorgehäuse bzw. einer Trennwand eingestellt werden können. Demnach ist die Erfindung gleichwohl auch auf ein Rotationswärmetauschersystem gerichtet, bei welchem die zuvor beispielhaft unter Bezugnahme auf Fig. 1 beschriebene Vorrichtung 1 zum Einsatz kommt, um den Strömungsquerschnitt des Spaltraumes am Rotor des Rotationswärmetauschersystems in geregelter Weise einstellen zu können.

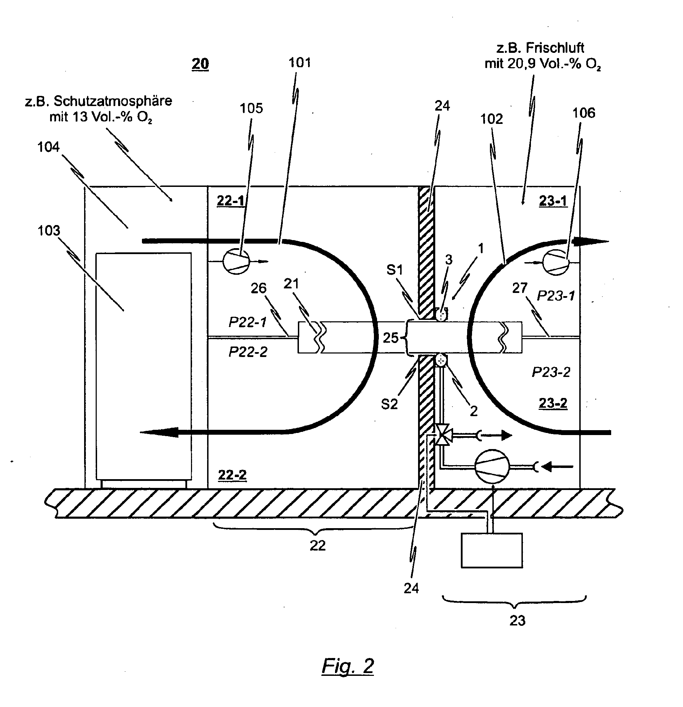

Nachfolgend wird unter Bezugnahme auf Fig. 2 ein Rotationswärmetauschersystem 20 beschrieben, bei welchem die erfindungsgemäße Vorrichtung 1 zum Einsatz kommt, um die auftretenden Leckverluste, und insbesondere in geregelter Weise den pro Zeiteinheit auftretenden Fluidübertritt zwischen den Wärmetauschermedien (erstes bzw. warmes Fluid und zweites bzw. kaltes Fluid) einstellen zu können.

Wie bereits angedeutet, handelt es sich bei dem nachfolgend unter Bezugnahme auf Fig. 2 beschriebenen Rotationswärmetauschersystem 20 um ein System, bei welchem als Wärmeübertrager ein Wärmerad bzw. Rotor 21 zum Einsatz kommt. Es sei darauf hingewiesen, dass es sich hierbei lediglich um eine bevorzugte Verwendung der erfindungsgemäßen Vorrichtung 1 handelt. Die erfindungsgemäße Lösung kann selbstverständlich auch bei anderen Anwendungen verwendet werden, um eine Leckrate einer Undichtigkeit auf einen vorgegebenen oder vorgebbaren Wert einzustellen.

Zur Erläuterung der Wirkungsweise der erfindungsgemäßen Vorrichtung 1 ist ein Rotationswärmetauschersystem 20 gewählt, bei welchem mit Hilfe eines Rotors 21 eine halbdirekte Wärmeübertragung zwischen einem in einem ersten Sektor 22 strömenden warmen Fluid 101 und einem in einem zweiten Sektor 23 strömenden kalten Fluid 102 bewirkt wird. Da bei derartigen Rotationswärmetauschern konstruktionsbedingt stets Undichtigkeiten zwischen dem Rotor 21 einerseits und einer den warmen Fluidstrom 101 von dem kalten Fluidstrom 102 trennenden Abtrennung 24 andererseits auftreten, eignet sich das in Fig. 2 schematisch dargestellte Rotationswärmetauschersystem 20 besonders gut, um die mit der erfindungsgemäßen Lösung erzielbaren Vorteile aufzuzeigen.

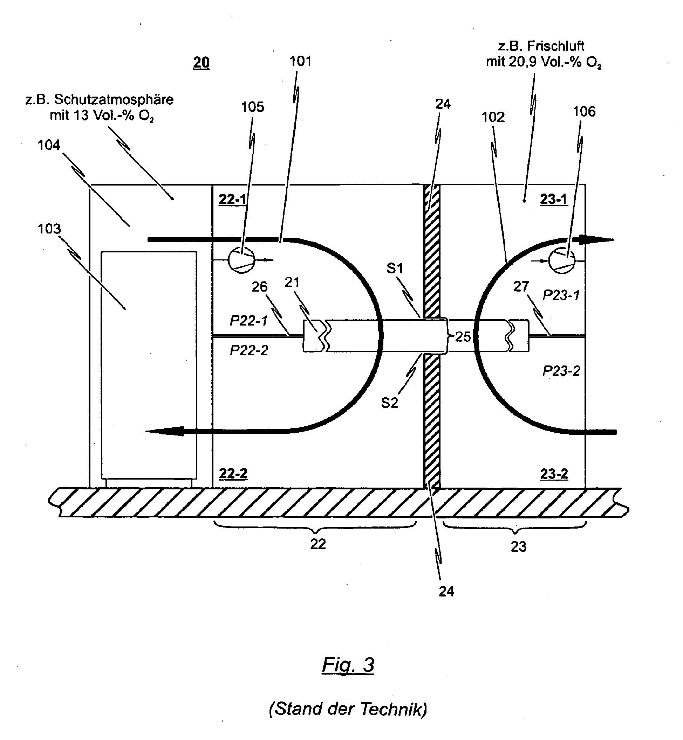

Bevor allerdings auf die Wirkungsweise der in einem Rotationswärmetauschersystem zum Einsatz kommenden Vorrichtung 1 gemäß der vorliegenden Erfindung näher eingegangen wird, soll zunächst unter Bezugnahme auf die Darstellung in Fig. 3 die Funktionsweise eines herkömmlichen Rotationswärmetauschers 20 beschrieben werden.

Das in Fig. 3 schematisch dargestellte und aus dem Stand der Technik allgemein bekannte Rotationswärmetauschersystem 20 ist wie folgt aufgebaut: das Rotationswärmetauschersystem 20 weist einen ersten Strörnungssektor (nachfolgend als "erster Sektor 22" bezeichnet) auf, welcher von einem warmen Fluid 101 durchströmt wird. Ferner ist ein zweiter Strömungssektor (nachfolgend "zweiter Sektor 23" genannt) vorgesehen, der von einem kalten Fluid 102 durchströmt wird.

Beispielweise ist es denkbar, dass für den warmen Fluidstrom die Abluft von EDV-Einrichtungen 103 verwendet wird, wobei - wie in Fig. 3 angedeutet - diese EDV-Einrichtungen 103 in einem an den ersten Sektor 22 angrenzenden Serverraum 104 angeordnet sind. Zur Kühlung derartiger EDV-Einrichtungen 103 ist es denkbar, mit Hilfe eines ersten Ventilatorsystems 105 die (warme) Abluft aus dem Serverraum 104 dem Rotationswärmetauschersystem 20 zuzuführen. In dem Rotationswärmetauschersystem 20 wird Wärmeenergie von dem warmen Fluid 101 über einen Wärmeübertrager (Rotor 21) auf den durch den zweiten Sektor 2 strömenden kalten Fluidstrom 102 übertragen. Nach dem Passieren des Wärmeübertragers (Rotor 21) wird der abgekühlte Fluidstrom 101 wieder dem Serverraum 104 zugeführt.

Der als Kühlmedium verwendete kalte Fluidstrom 102 fließt durch den zweiten Sektor 23 des Wärmetauschersystems 20, wobei ein zweites Ventilatorsystem 106 zum Einsatz kommt, um beispielsweise Außenluft für die Kühlung des Wärmeübertragers (Rotor 21) anzusaugen und diese nach dem Passieren des Wärmeübertragers 21 in erwärmter Form wieder an die Außenatmosphäre abzugeben.

Der erste Sektor 22, der von dem in dem Rotationswärmetauschersystem 20 abzukühlenden warmen Fluid 101 durchströmt wird, und der zweite Sektor 23, der von dem in dem Rotationswärmetauschersystem 20 zu erwärmenden kalten Fluid 102 durchströmt wird, sind über eine als Trennwand ausgebildete erste Abtrennung 24 voneinander räumlich getrennt. In dieser ersten Abtrennung 24 ist eine Rotoröffnung 25 vorgesehen, durch welche sich der als Wärmeübertrager zum Einsatz kommende Rotor 21 erstreckt.

Bei dem Rotor 21 handelt es sich um ein drehbar gelagertes Wärmerad, wobei die Drehachse vorzugsweise durch die in der ersten Abtrennung 24 ausgebildete Rotoröffnung 25 läuft. Der Rotor 21 besteht aus zahlreichen zur Drehachse parallelen Kanäle. Bei der Wärmeübertragung wird die Fähigkeit der Wände dieser Kanäle ausgenutzt, thermische Energie (Wärme) zu speichern. Durch die Kanäle, welche sich in der Hälfte des Rotors 21 befinden, die in dem ersten Sektor 22 liegt, wird die warme Abluft der EDV-Einrichtungen 103 (warmes Fluid 101) geblasen. Auf diese Weise werden die Wände der entsprechenden Kanäle aufgewärmt.

Beim Betrieb des Rotationswärmeüberträgers dreht sich der Rotor 21 weiter, so dass die aufgewärmten Kanäle den Bereich in dem zweite Sektor 23 erreichen, wo sie von der kalten Außenluft (kaltes Fluid 102) durchströmt werden. Den zuvor im ersten Sektor 22 aufgewärmten Wänden der Kanäle wird das kalte Fluid 102 erwärmt, was letztendlich zu einem Abkühlen dieser Wände führt.

Für den Betrieb des Wärmetauschersystems 20 gemäß der Darstellung in Fig. 3 ist es erforderlich, in dem ersten Sektor 22 die Strömung des warmen Fluids 101 durch diejenigen Kanäle des Rotors 21 zu leiten, welche sich gerade in dem ersten Sektor 22 befinden. In gleicher Weise ist dafür Sorge zu tragen, dass der Strom des kalten Fluids 102 in dem zweiten Sektor 23 durch diejenigen Kanäle des Rotors 21 geführt wird, welche sich gerade in dem zweiten Sektor 23 befinden.

Um dies zu erreichen, ist das Rotationswärmetauschersystem 20 mit einer zweiten und einer dritten Abtrennung 26, 27 ausgerüstet. Die zweite Abtrennung 26 ist in dem ersten Sektor 22 derart angeordnet, dass der erste Sektor 22 in eine erste Warmfluidkammer 22-1 und in eine zweite Warmfluidkammer 22-2 eingeteilt wird. Die erste Warmfluidkammer 22-1 steht mit der zweiten Warmfluidkammer 22-2 über die sich in dem ersten Sektor 22 befindenden Kanäle des Rotors 21 in Fluidverbindung.

Andererseits ist die dritte Abtrennung 27 in dem zweiten Sektor 23 derart angeordnet, dass der zweite Sektor 23 in eine erste Kaltfluidkammer 23-1 und in eine zweite Kaltfluidkammer 23-2 eingeteilt wird, wobei diese beiden Kaltfluidkammern 23-1, 23-2 über die sich in dem zweiten Sektor 23 befindenden Kanäle des Rotors 21 in Fluidverbindung stehen.

Der Darstellung in Fig. 3 ist insbesondere zu entnehmen, dass die zweite Abtrennung 26 und die dritte Abtrennung 27 derart angeordnet sind, dass sie sich radial zum Rotor 21 und senkrecht zur Drehachse des Rotors 21 erstrecken.

Da bei dem Rotationswärmetauschersystem 20 der drehbar gelagerte Rotor 21, welcher bei einer Drehung den ersten und zweiten Sektor 22, 23 durchläuft, sowohl in dem ersten als auch in dem zweiten Sektor 22, 23 ein Strömungswiderstand darstellt, den die jeweiligen Fluidströme passieren müssen, stellt sich in der ersten Warmfluidkammer 22-1 ein erster Druck P22-1 und in der über den Rotor 21 und der zweiten Abtrennung 26 von der ersten Warmfluidkammer 22-1 abgetrennten zweiten Warmfluidkammer 22-2 ein dritter Druck P22-2 ein, wobei dieser dritte Druck P22-2 geringer als der erste Druck P22-1 ist.

Da das Rotationswärmetauschersystem 20 (zumindest bei der in Fig. 3 gezeigten Ausführungsform) im Gegenstromprinzip betrieben wird, herrscht in der ersten Kaltfluidkammer 23-1 ein Druck (zweiter Druck P23-1), welcher niedriger als der in der zweiten Kaltfluidkammer 23-2 herrschende Druck (vierter Druck P23-2) ist.

Demnach tritt zwischen der ersten Warmfluidkammer 22-1 und der ersten Kaltfluidkammer 23-1, welche über die erste Abtrennung 24 voneinander getrennt sind, eine Druckdifferenz auf, wobei der in der ersten Warmfluidkammer 22-1 herrschende erste Druck P22-1 größer als der in der ersten Kaltfluidkammer 23-1 herrschende zweite Druck P23-1 ist. In gleicher Weise tritt auch zwischen der zweiten Warmfluidkammer 22-2 und der zweiten Kaltfluidkammer 23-2 eine Druckdifferenz auf. Der in der zweiten Kaltfluidkammer 23-2 herrschende vierte Druck P23-2 kann größer als der in der zweiten Warmfluidkammer 22-2 herrschende zweite Druck P22-2 sein.

Da in der ersten Abtrennung 24 die Rotoröffnung 25 vorgesehen ist, durch welche sich der Rotor 21 erstreckt, und da zwischen den jeweiligen Seitenflächen des Rotors 21 und den daran angrenzenden Flächen der ersten Abtrennung 24 in der Rotoröffnung 25 immer ein Raum (oberer und unterer Spaltraum S1, S2) vorhanden ist, kann die erste Abtrennung 24 insgesamt nicht als eine fluiddichte Trennwand angesehen werden, mit welcher der erste Sektor 22 und der zweite Sektor 23 stoffdicht voneinander getrennt werden. Vielmehr bewirkt die zwischen einer Warmfluidkammer 22-1, 22-2 und einer benachbart hierzu angeordneten Kaltfluidkammer 23-1, 23-2 auftretende Druckdifferenz einen Leckagestrom, wobei das warme Fluid 101 aus der ersten Warmfluidkammer 22-1 durch die obere Spaltöffnung S1 zu der benachbarten ersten Kalfluidkammer 23-1 strömt. Andererseits kann eine hierzu entgegengesetzte Strömung in dem unteren Bereich des Wärmetauschersystems 20 auftreten, bei welcher kaltes Fluid 102 aus der zweiten Kaltfluidkammer 23-2 durch die zweite Spaltöffnung S2 in die zweite Warmfluidkammer 22-2 strömt.

Demnach kann im Betrieb des aus dem Stand der Technik bekannten und in Fig. 3 schematisch dargestellten Wärmetauschersystems 20 nicht verhindert werden, dass zwischen dem ersten Sektor 22 und dem zweiten Sektor 23 ein Stoffaustausch stattfindet.

Die erfindungsgemäße Vorrichtung, wie sie zuvor anhand eines Ausführungsbeispiels unter Bezugnahme auf die Darstellungen in Fig. 1 beschrieben wurde, eignet sich bei dem beispielsweise in Fig. 3 dargestellten Rotationswärmetauschersystem 20, um die jeweiligen Leckraten der oberen und unteren Spaltöffnungen S1, S2 auf einen zuvor festlegbaren Wert einzustellen, indem in geregelter Weise der Spaltquerschnitt dieser Spaltöffnungen S1, S2 mit Hilfe des Abdichtkörpers 2 der Vorrichtung 1 zumindest teilweise blockiert wird. Auf diese Weise ist es möglich, die im Betrieb des Wärmetauschersystems 20 zwischen dem ersten Sektor 22 und dem zweiten Sektor 23 auftretenden Fluidübertritte zu steuern und - falls gewünscht - zu verhindern.

Bei der in Fig. 2 dargestellten Ausführungsform handelt es sich um ein Rotationswärmetauschersystem 20 gemäß Fig. 3, wobei allerdings die erfindungsgemäße Vorrichtung 1 zum Einsatz kommt, um die Leckraten der Spaltöffnungen S1 und S2 am Rotor 21 auf einen gewünschten, und insbesondere vorab festlegbaren Wert einstellen zu können.

Im Einzelnen ist hierbei vorgesehen, dass die Vorrichtung 1 einen ringförmigen Abdichtkörper 2 aufweist. Der ringförmige Abdichtkörper 2 wird über eine Halterung 4 an der ersten Abtrennung 24 gehalten, und zwar unmittelbar angrenzend an der Rotoröffnung 25. Bei der in Fig. 2 dargestellten Ausführungsform erstreckt sich der ringförmig ausgebildete Abdichtkörper 2 durch die jeweiligen Kaltfluidkammern 23-1 und 23-2 des zweiten Sektors 23. Alternativ oder zusätzlich hierzu ist es selbstverständlich auch denkbar, dass sich ein entsprechender und vorzugsweise ringförmig ausgebildeter Abdichtkörper 2 durch die jeweiligen Warmfluidkammern 22-1 und 22-2 des ersten Sektors 22 erstreckt.

Es sei darauf hingewiesen, dass bei der in Fig. 2 dargestellten Ausführungsform des Wärmetauschersystems 20 der Abdichtkörper 2 der erfindungsgemäßen Vorrichtung lediglich eine Kammer 3 aufweist. Wie bereits zuvor angedeutet, ist die Erfindung nicht auf die Anzahl der Kammern 3 im Abdichtkörper 2 beschränkt. Insbesondere ist es auch denkbar, dass - wie bei der in Fig. 1 dargestellten Ausführungsform - der bei dem Rotationswärmetauschersystem 20 gemäß Fig. 2 zum Einsatz kommende Abdichtkörper 2 mehrere Kammern aufweist.

Indem bei der in Fig. 2 dargestellten Ausführungsform des Wärmetauschersystems 20 der Abdichtkörper 2 in geregelter Weise mit einem unter Druck stehenden Fluid, wie beispielsweise mit Druckluft beaufschlagt wird, dehnt sich der Abdichtkörper 2 in Richtung des Rotors 21 aus und blockiert somit zumindest teilweise den über die Spaltöffnungen S1, S2 bereitgestellten Strömungsquerschnitt, der für die Leckverluste verantwortlich ist.

Wie schematisch angedeutet, ist auch bei dem in Fig. 2 dargestellten Rotationswärmetauschersystem 20 eine Steuerung 11 vorgesehen, welche die Druckbeaufschlagung und Druckentlastung des Abdichtkörpers 2 regelt. Besonders bevorzugt ist dabei die Steuerung 11 ausgelegt, die durch Fluidzufuhr bewirkbare Querschnitterweiterung des Abdichtkörpers 2 in Abhängigkeit von der Drehzahl des Rotors 21 einzustellen. Mit dieser Maßnahme kann wirkungsvoll verhindert werden, dass die Kammer 3 des Abdichtkörpers 2 derart druckbeaufschlagt wird, dass der Abdichtkörper 2, und insbesondere die Dichtungslippen (vgl. Fig. 1A, 1B) des Abdichtkörpers 2 die jeweilige Seitenfläche des Rotors 21 berühren, wenn das Rotationswärmetauschersystem 20 in Betrieb ist und der Rotor 21 eine Drehbewegung um seine Drehachse ausführt. Eine derartige Berührung mit der Rotoroberfläche sollte vermieden, werden, um einen Verschleiß des Abdichtkörpers 2 zu verhindern.

Wenn allerdings ein Stoffaustausch zwischen dem ersten Sektor 22 und dem zweiten Sektor 23 wirkungsvoll verhindert werden muss, ist es selbstverständlich denkbar, dass die Kammer 3 des Abdichtkörpers 2 derart mit einem unter Druck stehenden Fluid beaufschlagt wird, dass der Abdichtkörper 2 an der Seitenfläche des Rotors 21 anliegt und somit die Spaltöffnungen S1 und S2 vollständig abdichtet.

Zusammenfassend bleibt festzuhalten, dass die erfindungsgemäße Lösung geeignet ist, um bei einem Rotationswärmetauschersystem 20 eine stoffliche Vermischung des in der Warmzone strömenden ersten Fluids 101 mit dem in der Kaltzone fließenden zweiten Fluids 102 wirksam zu verhindern oder zumindest zu minimieren.

Demnach ist es denkbar, das beispielsweise in Fig. 2 schematisch dargestellte Rotationswärmetauschersystem 20 zum Klimatisieren (Kühlen) eines umschlossenen Raumes 104 zu verwenden, wobei dieser umschlossene Raum 104 mit einer präventiven Inertgasfeuerlöschanlage ausgerüstet ist.

Unter dem Begriff "Inertgasfeuerlöschanlage" oder "Inertisierungsanlage" ist eine Anlage zur Minderung des Risikos und zum Löschen von Bränden in einem umschlossenen Raum zu verstehen. Die bei einer derartigen Anlage resultierende Löschwirkung beruht auf dem Prinzip der Sauerstoffverdrängung. Die "normale" Umgebungsluft besteht bekanntlich zu 21 Vol.-% aus Sauerstoff, zu 78 Vol.-% aus Stickstoff und 1 Vol.-% aus sonstigen Gasen. Zur Brandlöschung oder zur Minderung des Risikos der Entstehung eines Brandes wird durch Einleiten von einem sauerstoffverdrängenden Gas, wie beispielsweise Stickstoff, der Sauerstoffanteil in der Raumatmosphäre verringert. Es ist bekannt, dass eine Löschwirkung einsetzt, wenn der Sauerstoffanteil unter 15 Vol.-% absinkt. Abhängig von den in dem umschlossenen Raum vorhandenen brennbaren Materialien kann ein weiteres Absinken des Sauerstoffanteils auf beispielsweise 12 Vol.-% oder tiefer erforderlich sein.

Bisher allerdings war es problematisch, diese "Inertgaslöschtechnik", wie das Fluten eines brandgefährdeten oder im Brand befindlichen Raumes durch ein sauerstoffverdrängendes Gas genannt wird, bei einem umschlossenen Raum einzusetzen, der über ein Rotationswärmetauschersystem 20 klimatisiert bzw. gekühlt wird. Die bei dem Rotationswärmetauschersystem 20 konstruktionsbedingt auftretenden Spaltöffnungen S1, S2 stellen eine Undichtigkeit dar, welche für einen entsprechenden Leckverlust verantwortlich ist. Dieser Leckverlust führt unvermeidlich zu einem Stoffaustausch zwischen der Raumatmosphäre des umschlossenen Raumes einerseits und der Außenatmosphäre, was gegen ein im umschlossenen Raum eingestelltes Inertisierungsniveau wirkt. Abhängig von dem Druckunterschied zwischen dem umschlossenen Raum und der Außenatmosphäre und der Größe der Spaltöffnungen S1, S2 gleicht sich die in dem umschlossenen Raum zuvor abgesenkte Sauerstoffkonzentration mehr oder weniger schnell an die Sauerstoffkonzentration der normalen Umgebungsluft an, so dass eine wirkungsvolle Brandlöschung oder ein wirkungsvoller präventiver Brandschutz nicht mehr gewährleistet ist. Bei bisherigen Systemen war es erforderlich, dem umschlossenen Raum kontinuierlich oder regelmäßig Inertgas zuzuführen, um somit die durch die Spaltöffnungen S1, S2 auftretenden "Inertgasverluste" ausgleichen zu können. Das erforderliche Nachführen von Inertgas führte dazu, dass die Inertgaslöschtechnik bei Räumen, welche mit einem Rotationswärmetauschersystem gekühlt werden, bisher nicht wirtschaftlich eingesetzt werden konnte.

Mit der erfindungsgemäßen Lösung allerdings wird nun eine Maßnahme bereitgestellt, die den Einsatz der Inertgaslöschtechnik bei einem mit einem Rotationswärmetauschersystem klimatisierten Raum gestattet, ohne dass dies einen negativen Einfluss auf die laufenden Betriebskosten der Inertgasfeuerlöschanlage hat.

Insbesondere ist mit der erfindungsgemäßen Lösung ein Verfahren zum Betrieb einer Inertgasfeuerlöschanlage denkbar, wobei im Falle eines Brandes oder zur Minderung des Risikos eines Brandes in dem umschlossenen Raum durch Einleiten eines sauerstoffverdrängenden Gases der Sauerstoffgehalt in dem umschlossenen Raum 104 auf ein vorab festgelegtes oder festlegbares Inertisierungsniveau abgesenkt wird. Durch Zufuhr von Fluid zu der mindestens einen Kammer 3a, 3b des Abdichtkörpers 2 wird der Querschnitt des Abdichtkörpers 2 derart expandiert, dass die Spaltöffnungen S1, S2 am Rotor 21 zumindest teilweise abgedichtet werden.

Dabei ist es von Vorteil, wenn während des Einleitens des sauerstoffverdrängenden Gases in die Raumatmosphäre des umschlossenen Raumes 104 die Spaltöffnungen S1, S2 mit dem Abdichtkörper 2 nicht vollständig abgedichtet werden, um durch die Spaltöffnungen S1, S2 die beim Fluten des umschlossenen Raumes erforderliche Druckentlastung bereitzustellen. Mit der erfindungsgemäßen Lösung kann somit auf separate Druckentlastungsklappen etc. verzichtet werden.

Andererseits ist es bevorzugt, wenn im Falle eines Brandes oder zur Minderung des Risikos eines Brandes in dem umschlossenen Raum 104 auch die Drehung des Rotors 21 angehalten wird, um ein vollständiges Abdichten der Spalträume S1, S2 mit Hilfe des Abdichtkörpers 2 durchführen zu können, ohne dass der Abdichtkörper 2 einem erhöhten Verschleiß unterworfen ist. Vorzugsweise sollte dabei zunächst die Drehung des Rotors 21 angehalten werden, und im Anschluss danach das sauerstoffverdrängende Gas in die Raumatmosphäre einzuleiten. Wenn ein Druckausgleich nicht mehr erforderlich ist, sollte eine vollständige Abdichtung der Spalträume S1, S2 erfolgen, und zwar indem die mindestens eine Kammer 3 des Abdichtkörpers 2 derart mit einem unter Druck stehenden Fluid beaufschlagt wird, dass der Querschnitt des Abdichtkörpers 2 in den Strömungsquerschnitt der Spaltöffnungen S1, S2 expandiert, und somit die Spaltöffnungen S1, S2 vollständig abgedichtet werden. Selbstverständlich ist aber auch eine andere Reihenfolge der zuvor genannten Verfahrensschritte denkbar.

In einer bevorzugten Weiterbildung der zuletzt beschriebenen Ausführungsform, bei welcher ein umschlossener Raum 104 einerseits mit einem Rotationswärmetauschersystem 20 gemäß der in Fig. 2 dargestellten Ausführungsform und andererseits mit einer Inertgasfeuerlöschanlage ausgerüstet ist, wird der Sauerstoffgehalt in dem umschlossenen Raum kontinuierlich oder zu vorgegebenen Zeiten bzw. Ereignissen gemessen. In Abhängigkeit von dem gemessenen Sauerstoffgehalt wird ggf. weiteres sauerstoffverdrängendes Gas in den umschlossenen Raum nachgeführt, um das zuvor eingestellte Inertisierungsniveau (ggf. mit einem bestimmten Regelbereich) zu halten.

Alternativ oder zusätzlich hierzu ist es selbstverständlich auch denkbar, dass in der Raumatmosphäre des umschlossenen Raumes kontinuierlich oder zu vorgegebenen Zeiten bzw. Ereignissen mit Hilfe einer Branderkennungsvorrichtung erfasst wird, ob eine Brandkenngröße vorliegt, wobei das Einleiten des sauerstoffverdrängenden Gases in Abhängigkeit von dem Signal der Branderkennungsvorrichtung automatisch initiiert wird.

Wenn eine Initiierung des umschlossenen Raumes vorgenommen wird, ist es nicht nur bevorzugt, den Rotor 21 anzuhalten und eine vollständige Abdichtung der Spaltöffnungen S1, S2 zu bewirken, sondern auch die beiden Ventilatorsysteme 105, 106 und insbesondere das erste Ventilatorsystem 105 anzuhalten, um ein ggf. bereits im umschlossenen Raum 104 ausgebrochenes Feuer nicht weiter anzufachen. Allerdings dient das erste Ventilatorsystem 104 beim Einleiten des sauerstoffverdrängenden Gases in den umschlossenen Raum 104 dazu, dass in möglichst rascher Zeit das erforderliche Inertisierunsniveau gleichmäßig eingestellt werden kann, da mit dem ersten Ventilatorsystem 104 eine permanente Vermischung der Raumatmosphäre stattfindet.

Demnach bleibt festzuhalten, dass mit der erfindungsgemäßen Lösung ein Rotationswärmetauschersystem 20 wirtschaftlich zur Kühlung der Raumatmosphäre eines Raumes 104 eingesetzt werden kann, welcher für einen präventiven Brandschutz mit einer Inertgasfeuerlöschanlage ausgerüstet ist. Mit der erfindungsgemäßen Lösung kann in einer einfachen, aber effektiven Weise bei Bedarf ein Fluidübertritt zwischen den jeweiligen Zonen 22, 23 des Wärmetauschersystems 20 verhindert oder zumindest reduziert werden, so dass bei einem inertisierten Raum eine wesentlich geringere Menge der Raumatmosphäre zu der Kaltluftseite des Wärmetauschersystems 20 strömen kann und somit auch nur eine geringere Menge an Inertgas nachgeführt werden muss.

Die Erfindung ist nicht auf die zuvor unter Bezugnahme auf die Zeichnungen beschriebenen Ausführungsformen beschränkt, sondern ergibt sich anhand der beiliegenden Patentansprüche.

### Bezugszeichenliste

- 1: Vorrichtung zum Einstellen einer Leckrate
- 2: Abdichtkörper
- 3a, 3b: Kammer
- 4: Halterung
- 5a, 5b: Halterungsnasen
- 6: Mittelwand
- 7: Öffnung
- 8a, 8b: Nut
- 9: Leitungssystem
- 10: Fluidquelle/Druckluftquelle
- 11: Steuerung
- 12: Durchflusssensor
- 13a, 13b: Dichtungslippe
- 14: Dichtungsboden
- 15: Mundstück
- 16: Schraubverbindung
- 20: Rotationswärmetauschersystem
- 21: Rotor
- 22: erster Sektor
- 23: zweiter Sektor
- 24: erste Abtrennung
- 25: Rotoröffnung
- 26: zweite Abtrennung
- 27: dritte Abtrennung
- 101: warmes Fluid
- 102: kaltes Fluid
- 103: EDV-Einrichtungen
- 104: Serverraum
- 105: erstes Ventilatorsystem
- 106: zweites Ventilatorsystem
- A1: erstes Bauteil
- A2: zweites Bauteil
- F1: erste Seitenfläche
- F2: zweite Seitenfläche
- S: Undichtigkeit/Spalt
- S1: oberer Spaltraum
- S2: unterer Spaltraum
- V1: Ventil

## Patentansprüche

1. Verfahren zum Betrieb einer Anlage zur Minderung des Risikos und zum Löschen von Bränden in einem umschlossenen Raum (104), wobei die Anlage folgendes aufweist:
- ein Rotationswärmetauschersystem (20) zum Übertragen von Wärmeenergie zwischen einem warmen Fluid (101) und einem kalten Fluid (102), wobei das Rotationswärmetauschersystem (20) folgendes aufweist:
- einen ersten Sektor (22), der von dem warmen Fluid (101) durchströmt wird, und einen zweiten Sektor (23), der von dem kalten Fluid (102) durchströmt wird;
- eine Abtrennung (24), welche den ersten Sektor (22) und den zweiten Sektor (23) räumlich voneinander trennt;
- einen Rotationswärmeübertrager zum Übertragen von thermischer Energie von dem warmen Fluidstrom zu dem kalten Fluidstrom, wobei der Rotationswärmeübertrager einen drehbar gelagerten Rotor (21) aufweist, welcher zur Drehachse parallele Kanäle aufweist und sich derart durch eine durch die Abtrennung (24) laufende Rotoröffnung (25) erstreckt, dass er bei einer Drehung den ersten und zweiten Sektor (22, 23) durchläuft; und
- mindestens eine Vorrichtung (1) zum Einstellen einer Leckrate einer Spaltöffnung (S1, S2) zwischen einer Stirnseite der Abtrennung (24) und einer Seitenfläche des Rotors (21) auf einen festgelegten Wert, wobei die Vorrichtung (1) einen Abdichtkörper (2) mit mindestens einer Kammer (3, 3a, 3b) und ein mit der mindestens einen Kammer (3, 3a, 3b) verbundenes Leitungssystem (9), über welches der Kammer (3, 3a, 3b) in geregelter Weise ein Fluid zuführbar ist, aufweist, wobei der Abdichtkörper (2) zumindest teilweise aus einem flexiblen Material gebildet und sein Querschnitt bei Zufuhr von Fluid zu der mindestens einen Kammer (3, 3a, 3b) in Richtung der Undichtigkeit expandierbar ist;
- ein erstes Ventilatorsystem (105) zum Ansaugen eines warmen Fluids (101) aus dem umschlossenen Raum (104) derart, dass das angesaugte Fluid (101) den ersten Sektor (22) des Rotationswärmetauschersystems (20) durchströmt und anschließend wieder dem umschlossenen Raum (104) zugeführt wird;
- ein zweites Ventilatorsystem (106) zum Bewirken einer Durchströmung des zweiten Sektors (23) des Rotationswärmetauschersystems (20) mit einem kalten Fluid (102); und
- eine Anlage zum Bereitstellen eines sauerstoffverdrängenden Gases, wobei im Falle eines Brandes oder zur Minderung des Risikos eines Brandes in dem umschlossenen Raum (104) die folgenden Verfahrensschritte ausgeführt werden:
i) durch Einleiten des bereitgestellten sauerstoffverdrängenden Gases wird der Sauerstoffgehalt in dem umschlossenen Raum (104) auf ein vorab festgelegtes oder festlegbares Inertisierungsniveau abgesenkt; und
ii) durch Zufuhr von Fluid zu der mindestens einen Kammer (3, 3a, 3b) des Abdichtkörpers (2) wird der Querschnitt des Abdichtkörpers (2) derart expandiert, dass die Spaltöffnung (S1, S2) zwischen der Stirnseite der Abtrennung (24) und der Seitenfläche des Rotors (21) in geregelter Weise zumindest teilweise abgedichtet wird.

2. Verfahren nach Anspruch 1,
wobei im Falle eines Brandes oder zur Minderung des Risikos eines Brandes in dem umschlossenen Raum (104) ferner der folgende Verfahrensschritt ausgeführt wird:
iii) eine Drehung des Rotors (21) wird angehalten.

3. Verfahren nach Anspruch 2,
wobei die Verfahrensschritte i) bis iii) zeitgleich oder zumindest nahezu zeitgleich ausgeführt werden.

4. Verfahren nach Anspruch 2 oder 3,
wobei im Verfahrensschritt ii) der Querschnitt des Abdichtkörpers (2) derart expandiert wird, dass der Spalt (S1, S2) zwischen der Stirnseite der Abtrennung (24) und der Seitenfläche des Rotors (21) vollständig abgedichtet wird.

5. Verfahren nach einem der Ansprüche 1 bis 4,
wobei das Verfahren ferner die folgenden Verfahrensschritte aufweist:
iv) der Sauerstoffgehalt in dem umschlossenen Raum (104) wird kontinuierlich oder zu vorgegebenen Zeiten und/oder Ereignissen gemessen; und
v) der im Verfahrensschritt i) abgesenkte Sauerstoffgehalt wird ggf. durch weiteres Einleiten eines sauerstoffverdrängenden Gases auf dem Inertisierungsniveau gehalten.

6. Verfahren nach einem der Ansprüche 1 bis 5,
wobei kontinuierlich oder zu vorgegebenen Zeiten und/oder Ereignissen mit Hilfe einer Branderkennungsvorrichtung erfasst wird, ob in dem umschlossenen Raum (104) eine Brandkenngröße vorliegt; und/oder wobei im Falle eines Brandes oder zur Minderung des Risikos eines Brandes in dem umschlossenen Raum (104) ferner das erste Ventilatorsystem (105) angehalten wird und/oder das zweite Ventilatorsystem (106) angehalten wird.

7. Anlage zur Minderung des Risikos und zum Löschen von Bränden in einem umschlossenen Raum (104), wobei die Anlage folgendes aufweist:
- ein Rotationswärmetauschersystem (20) zum Übertragen von Wärmeenergie zwischen einem warmen Fluid (101) und einem kalten Fluid (102), wobei das Rotationswärmetauschersystem (20) folgendes aufweist:
- einen ersten Sektor (22), der von dem warmen Fluid (101) durchströmt wird, und einen zweiten Sektor (23), der von dem kalten Fluid (102) durchströmt wird;
- eine Abtrennung (24), welche den ersten Sektor (22) und den zweiten Sektor (23) räumlich voneinander trennt;
- einen Rotationswärmeübertrager zum Übertragen von thermischer Energie von dem warmen Fluidstrom zu dem kalten Fluidstrom, wobei der Rotationswärmeübertrager einen drehbar gelagerten Rotor (21) aufweist, welcher zur Drehachse parallele Kanäle aufweist und sich derart durch eine durch die Abtrennung (24) laufende Rotoröffnung (25) erstreckt, dass er bei einer Drehung den ersten und zweiten Sektor (22, 23) durchläuft; und
- mindestens eine Vorrichtung (1) zum Einstellen einer Leckrate einer Spaltöffnung (S1, S2) zwischen einer Stirnseite der Abtrennung (24) und einer Seitenfläche des Rotors (21) auf einen festgelegten Wert, wobei die Vorrichtung (1) einen Abdichtkörper (2) mit mindestens einer Kammer (3, 3a, 3b) und ein mit der mindestens einen Kammer (3, 3a, 3b) verbundenes Leitungssystem (9), über welches der Kammer (3, 3a, 3b) in geregelter Weise ein Fluid zuführbar ist, aufweist, wobei der Abdichtkörper (2) zumindest teilweise aus einem flexiblen Material gebildet und sein Querschnitt bei Zufuhr von Fluid zu der mindestens einen Kammer (3, 3a, 3b) in Richtung der Undichtigkeit expandierbar ist;
- ein erstes Ventilatorsystem (105) zum Ansaugen von warmem Fluid (101) aus dem umschlossenen Raum (104) derart, dass das angesaugte Fluid (101) den ersten Sektor (22) des Rotationswärmetauschersystems (20) durchströmt und anschließend wieder dem umschlossenen Raum (104) zugeführt wird;
- ein zweites Ventilatorsystem (106) zum Bewirken einer Durchströmung des zweiten Sektors (23) des Rotationswärmetauschersystems (20) mit einem kalten Fluid (102);
- eine Anlage zum Bereitstellen eines sauerstoffverdrängenden Gases; und
- eine Steuerung (11), welche ausgelegt ist, zur Ausführung des Verfahrens nach einem der Ansprüche 1 bis 6 zumindest einige der ansteuerbaren Komponenten (10, 21, 105, 106, V1) der Anlage entsprechend anzusteuern.

8. Anlage nach Anspruch 7,
wobei ferner eine Halterung (4) vorgesehen ist zum Halten des Abdichtkörpers (2) an der Spaltöffnung (S1, S2).

9. Anlage nach Anspruch 7 oder 8,
wobei die Steuerung (11) ausgelegt ist, die durch Fluidzufuhr bewirkbare Querschnittserweiterung des Abdichtkörpers (2) in Abhängigkeit von einer vorgegebenen, maximal zulässigen Leckrate der Undichtigkeit einzustellen.

10. Anlage nach Anspruch 9,
wobei die Steuerung (11) ausgelegt ist, die Querschnittserweiterung des Abdichtkörpers (2) durch Einstellen der der mindestens einen Kammer (3, 3a, 3b) zuzuführenden Fluidmenge einzustellen.

11. Anlage nach Anspruch 10,
wobei ferner eine Quelle (10) zum Bereitstellen eines unter Druck stehenden Fluids vorgesehen ist, welche über das Leitungssystem (9) mit der mindestens einen Kammer (3, 3a, 3b) verbunden oder verbindbar ist zum geregelten Zuführen des unter Druck stehenden Fluids zu der mindestens einen Kammer (3, 3a, 3b).

12. Anlage nach einen der Ansprüche 7 bis 11,
wobei die Steuerung (11) ausgelegt ist, die durch Fluidzufuhr bewirkbare Querschnittserweiterung des Abdichtkörpers (2) in Abhängigkeit von einer Drehzahl des Rotors (21) einzustellen.

13. Anlage nach einem der Ansprüche 7 bis 12,
wobei der Abdichtkörper (2) eine schlauchförmige Kammer (3, 3a, 3b) aufweist, welche in der Nähe der Spaltöffnung (S1, S2) angeordnet ist.

## Claims

1. A method of operating a system for minimizing the risk of fire and to extinguish fires in an enclosed room (104), wherein the system comprises the following:
- a rotary heat exchanger system (20) to transfer thermal energy between a warm fluid (101) and a cold fluid (102), wherein the rotary heat exchanger system (20) comprises the following:
- a first sector (22) through which the warm fluid (101) flows and a second sector (23) through which the cold fluid (102) flows;
- a separation (24) which spatially separates the first sector (22) and the second sector (23) from one another;
- a rotary heat exchanger to transfer thermal energy from the warm fluid flow to the cold fluid flow, wherein the rotary heat exchanger comprises a rotatably-mounted rotor (21) exhibiting ducts parallel to the rotational axis and extending through a rotor opening (25) running through the separation (24) such that it passes through the first and second sector (22, 23) upon rotation; and
- at least one device (1) for regulating the leakage rate of a gap opening (S1, S2) between a front face of the separation (24) and a lateral surface of the rotor (21) to a defined value, wherein the device (1) comprises a sealing body (2) having at least one chamber (3, 3a, 3b) and a line system (9) connected to said at least one chamber (3, 3a, 3b) through which the chamber (3, 3a, 3b) can be supplied with fluid in a regulated manner, wherein the sealing body (2) is at least partly formed from a flexible material and its cross-section is expandable in the direction of the leakage upon fluid being supplied to the at least one chamber (3, 3a, 3b);
- a first ventilator system (105) to siphon a warm fluid (101) from the enclosed room (104) such that the siphoned fluid (101) flows through the first sector (22) of the rotary heat exchanger system (20) and is thereafter re-fed back to the enclosed room (104);
- a second ventilator system (106) to effect the flowing of a cold fluid (102) through the second sector (23) of the rotary heat exchanger system (20); and
- a system to supply an oxygen-displacing gas,
wherein the following method steps are performed in the event of a fire or to minimize the risk of a fire in the enclosed room (104):
i) lowering the oxygen content in the enclosed room (104) to a predefined or definable inerting level by introducing the provided oxygen-displacing gas; and
ii) expanding the cross-section of the sealing body (2) by supplying fluid to the at least one chamber (3, 3a, 3b) of the sealing body (2) such that the gap opening (S1, S2) between the front face of the separation (24) and the lateral surface of the rotor (21) is at least partly sealed in regulated manner.

2. The method according to claim 1,
wherein the further following method step is performed in the event of a fire or to minimize the risk of a fire in the enclosed room (104): iii) stopping the rotation of the rotor (21).

3. The method according to claim 2,
wherein method steps i) to iii) are performed simultaneously or at least nearly simultaneously.

4. The method according to claim 2 or 3,
wherein the cross-section of the sealing body (2) is expanded in method step ii) such that the gap (S1, S2) between the front face of the separation (24) and the lateral surface of the rotor (21) is completely sealed.

5. The method according to any one of claims 1 to 4,
wherein the method comprises the further following method steps:
iv) measuring the oxygen content in the enclosed room (104) continuously or at predefined times and/or upon predefined events; and
v) maintaining the oxygen content lowered in method step i) at the inerting level by the further introducing of an oxygen-displacing gas as needed.

6. The method according to any one of claims 1 to 5,
wherein a fire-detecting device detects whether a fire characteristic is present in the enclosed room (104) continuously or at predefined times and/or upon predefined events; and/or
wherein the first ventilator system (105) is further stopped and/or the second ventilator system (106) is further stopped in the event of a fire or to minimize the risk of a fire in the enclosed room (104).

7. A system to minimize the risk of fire and to extinguish fires in an enclosed room (104), wherein the system comprises the following:
- a rotary heat exchanger system (20) to transfer thermal energy between a warm fluid (101) and a cold fluid (102), wherein the rotary heat exchanger system (20) comprises the following:
- a first sector (22) through which the warm fluid (101) flows and a second sector (23) through which the cold fluid (102) flows;
- a separation (24) which spatially separates the first sector (22) and the second sector (23) from one another;
- a rotary heat exchanger to transfer thermal energy from the warm fluid flow to the cold fluid flow, wherein the rotary heat exchanger comprises a rotatably-mounted rotor (21) exhibiting ducts parallel to the rotational axis and extending through a rotor opening (25) running through the separation (24) such that it passes through the first and second sector (22, 23) upon rotation; and
- at least one device (1) for regulating the leakage rate of a gap opening (S1, S2) between a front face of the separation (24) and a lateral surface of the rotor (21) to a defined value, wherein the device (1) comprises a sealing body (2) having at least one chamber (3, 3a, 3b) and a line system (9) connected to said at least one chamber (3, 3a, 3b) through which the chamber (3, 3a, 3b) can be supplied with fluid in a regulated manner, wherein the sealing body (2) is at least partly formed from a flexible material and its cross-section is expandable in the direction of the leakage upon fluid being supplied to the at least one chamber (3, 3a, 3b);
- a first ventilator system (105) to siphon warm fluid (101) from the enclosed room (104) such that the siphoned fluid (101) flows through the first sector (22) of the rotary heat exchanger system (20) and is thereafter re-fed back to the enclosed room (104);
- a second ventilator system (106) to effect the flowing of a cold fluid (102) through the second sector (23) of the rotary heat exchanger system (20);
- a system to supply an oxygen-displacing gas, and
- a controller (11) designed to execute the method according to any one of claims 1 to 6 by correspondingly controlling at least some of the controllable components (10, 21, 105, 106, V1) of the system.

8. The system according to claim 7,
wherein a retainer (4) is further provided to hold the sealing body (2) at the gap opening (S1, S2).

9. The system according to claim 7 or 8,
wherein the controller (11) is designed to regulate the cross-sectional expanding of the sealing body (2) effected by the supply of fluid as a function of a predefined maximum allowable leakage rate for the leakage.

10. The system according to claim 9,
wherein the controller (11) is designed to regulate the cross-sectional expanding of the sealing body (2) by regulating the amount of fluid to be supplied to the at least one chamber (3, 3a, 3b).

11. The system according to claim 10,
wherein to supply a pressurized fluid, a source (10) connected or connectable to the at least one chamber (3, 3a, 3b) via the line system (9) is further provided for the regulated supplying of the pressurized fluid to the at least one chamber (3, 3a, 3b).

12. The system according to any one of claims 7 to 11,
wherein the controller (11) is designed to regulate the cross-sectional expanding of the sealing body (2) effected by the supply of fluid as a function of the rotational speed of the rotor (21).

13. The system according to any one of claims 7 to 12,
wherein the sealing body (2) exhibits a tubular chamber (3, 3a, 3b) arranged in the proximity of the gap opening (S1, S2).

## Revendications

1. Procédé pour le fonctionnement d'une installation en vue de réduire le risque et pour l'extinction d'incendies dans un espace clos (104), ladite installation comprenant :
- un système échangeur de chaleur rotatif (20) pour la transmission d'énergie thermique entre un fluide chaud (101) et un fluide froid (102), dans lequel le système échangeur de chaleur rotatif (20) comprend les éléments suivants :
- un premier secteur (22) qui est traversé par le fluide chaud (101), et un second secteur (23) qui est traversé par le fluide froid (102) ;
- une séparation (24) qui sépare le premier secteur (22) et le second secteur (23) l'un par rapport à l'autre dans l'espace ;
- un élément de transmission de chaleur rotatif pour la transmission d'énergie thermique depuis le flux de fluide chaud vers le flux de fluide froid, ledit élément de transmission de chaleur rotatif comprenant un rotor (21) monté rotatif, qui présente des canaux parallèles à l'axe de rotation et s'étend à travers une ouverture de rotor (25) qui traverse la séparation (24) de telle manière qu'il traverse le premier secteur et le second secteur (22, 23) lors d'une rotation ; et
- au moins un dispositif (1) pour régler un taux de fuite d'une ouverture en fente (S1, S2) entre une face frontale de la séparation (24) et une surface latérale du rotor (21) à une valeur imposée, dans lequel le dispositif (1) comprend un corps d'étanchement (2) avec au moins une chambre (3, 3a, 3b) et un système de conduites (9), relié à ladite au moins une chambre (3, 3a, 3b), au moyen duquel un fluide peut être amené de manière régulée à la chambre (3, 3a, 3b), dans lequel le corps d'étanchement (2) est au moins partiellement formé d'un matériau flexible et, lors de l'admission de fluide vers ladite au moins une chambre (3, 3a, 3b), sa section est susceptible de se dilater en direction du défaut d'étanchéité ;
- un premier système ventilateur (105) pour aspirer un fluide chaud (101) hors de l'espace clos (104) de telle manière que le fluide aspiré (101) traverse le premier secteur (22) du système échangeur de chaleur rotatif (20) et est ensuite ramené à l'espace clos (104) ;
- un second système ventilateur (106) pour provoquer une traversée du second secteur (22) du système échangeur de chaleur rotatif (20) avec un fluide froid (102) ; et
- une installation pour préparer un gaz refoulant l'oxygène ;
dans lequel, dans le cas d'un incendie ou en vue de réduire le risque d'un incendie dans l'espace clos (104), on exécute les étapes de procédé suivantes :
i) par introduction du gaz préparé refoulant l'oxygène on abaisse la teneur en oxygène dans l'espace clos (104) à un niveau d'inertisation auparavant déterminé ou susceptible d'être déterminé ; et
ii) par admission de fluide vers ladite au moins une chambre (3, 3a, 3b) du corps d'étanchéité (2), la section transversale du corps d'étanchéité (2) est mise en expansion de telle façon que l'ouverture en fente (S1, S2) entre la face frontale de la séparation (24) et la surface latérale du rotor (21) est au moins partiellement étanchée de manière régulée.

2. Procédé selon la revendication 1,
dans lequel dans le cas d'un incendie ou en vue de réduire le risque d'un incendie dans l'espace clos (104), on exécute en outre l'étape de procédé suivante :
iii) la rotation du rotor (21) est arrêtée.

3. Procédé selon la revendication 2,
dans lequel les étapes de procédé i) à iii) sont exécutées simultanément ou au moins pratiquement simultanément.

4. Procédé selon la revendication 2 ou 3,
dans lequel dans l'étape de procédé ii), la section transversale du corps d'étanchement (2) est mise en expansion de telle manière que la fente (S1, S2) entre la face frontale de la séparation (24) et la surface latérale du rotor (21) est complètement étanchée.

5. Procédé selon l'une des revendications 1 à 4,
dans lequel le procédé comprend en outre les étapes suivantes :
iv) la teneur en oxygène dans l'espace clos (104) est mesurée en continu ou à des instants et/ou événements prédéterminés ; et
v) la teneur en oxygène abaissée dans l'étape i) est le cas échéant maintenue au niveau d'inertisation par poursuite de l'injection d'un gaz refoulant l'oxygène.

6. Procédé selon l'une des revendications 1 à 5,
dans lequel on détecte en continu ou à des instants et/ou événements prédéterminés, à l'aide d'un dispositif de reconnaissance d'un incendie, si on est en présence d'une valeur caractéristique d'un incendie dans l'espace clos (104) ; et/ou
dans le cas d'un incendie ou pour réduire le risque d'un incendie dans l'espace clos (104), le premier système ventilateur (105) est en outre arrêté et/ou le second système ventilateur (106) est en outre arrêté.

7. Installation pour réduire le risque et pour l'extinction d'incendie dans un espace clos (104), ladite installation comprenant :
- un système échangeur de chaleur rotatif (20) pour la transmission d'énergie thermique entre un fluide chaud (101) et un fluide froid (102), ledit système échangeur de chaleur rotatif (20) comprenant les éléments suivants :
- un premier secteur (22) qui est traversé par le fluide chaud (101), et un second secteur (23) qui est traversé par le fluide froid (102) ;
- une séparation (24) qui sépare le premier secteur (22) et le second secteur (23) l'un par rapport à l'autre dans l'espace ;
- un élément de transmission de chaleur rotatif pour la transmission d'énergie thermique depuis le flux de fluide chaud vers le flux de fluide froid, ledit élément de transmission de chaleur rotatif comprenant un rotor (21) monté rotatif, qui présente des canaux parallèles à l'axe de rotation et s'étend à travers une ouverture de rotor (25) qui traverse la séparation (24) de telle manière qu'il traverse le premier secteur et le second secteur (22, 23) lors d'une rotation ; et
- au moins un dispositif (1) pour régler un taux de fuite d'une ouverture en fente (S1, S2) entre une face frontale de la séparation (24) et une surface latérale du rotor (21) à une valeur imposée, dans lequel le dispositif (1) comprend un corps d'étanchement (2) avec au moins une chambre (3, 3a, 3b) et un système de conduites (9), relié à ladite au moins une chambre (3, 3a, 3b), au moyen duquel un fluide peut être amené de manière régulée à la chambre (3, 3a, 3b), dans lequel le corps d'étanchement (2) est au moins partiellement formé d'un matériau flexible et, lors de l'admission de fluide vers ladite au moins une chambre (3, 3a, 3b), sa section est susceptible de se dilater en direction du défaut d'étanchéité ;
- un premier système ventilateur (105) pour aspirer un fluide chaud (101) hors de l'espace clos (104) de telle manière que le fluide aspiré (101) traverse le premier secteur (22) du système échangeur de chaleur rotatif (20) et est ensuite ramené à l'espace clos (104) ;
- un second système ventilateur (106) pour provoquer une traversée du second secteur (22) du système échangeur de chaleur rotatif (20) avec un fluide froid (102) ;
- une installation pour préparer un gaz refoulant l'oxygène ; et
- une commande (11) qui est conçue pour mettre en oeuvre le procédé selon l'une des revendications 1 à 6 afin de piloter de façon correspondante au moins quelques-uns des composants (10, 21, 105, 106, V1) de l'installation susceptibles d'être pilotés.

8. Installation selon la revendication 7,
dans laquelle est en outre prévue une monture (4) pour maintenir le corps d'étanchement (2) au niveau de l'ouverture en fente (S1, S2).

9. Installation selon la revendication 7 ou 8,
dans laquelle la commande (11) est conçue pour régler l'élargissement de section transversale, provoqué par alimentation de fluide, du corps d'étanchement (2) en dépendance d'un taux de fuite admissible maximum prédéterminé du défaut d'étanchéité.

10. Installation selon la revendication 9,
dans laquelle la commande (11) est conçue pour régler l'élargissement de section transversale du corps d'étanchement (2) par réglage de la quantité de fluide à amener à ladite au moins une chambre (3, 3a, 3b).

11. Installation selon la revendication 10,
dans laquelle est en outre prévue une source (10) pour la préparation d'un fluide sous pression, qui est reliée ou susceptible d'être reliée via le système de conduite (9) à ladite au moins une chambre (3, 3a, 3b), en vue d'une admission régulée du fluide sous pression vers ladite au moins une chambre (3, 3a, 3b).

12. Installation selon l'une des revendications 7 à 11,
dans laquelle la commande (11) est conçue pour régler l'élargissement de section transversale, provoqué par alimentation de fluide, du corps d'étanchement (2) en dépendance d'une vitesse de rotation du rotor (21).

13. Installation selon l'une des revendications 7 à 12,
dans laquelle le corps d'étanchement (2) comprend une chambre en forme de tuyau souple (3, 3a, 3b), laquelle est agencée à proximité de l'ouverture en fente (S1, S2).
